# EUROPÄISCHE PATENTANMELDUNG

(11) **EP 2 597 766 A2**
(43) Veröffentlichungstag der Anmeldung: **29.05.2013**
(21) Anmeldenummer: 12192517.6
(22) Anmeldetag: 14.11.2012
(51) Int. Cl.: H02M 3/335

(54) **Bidirektionaler resonanter Wandler**

(30) Priorität: 23.11.2011 DE 102011119355
(71) Anmelder: FuG Elektronik GmbH, 83024 Rosenheim (DE)
(72) Erfinder: Attenberger, Dr. Wilfried, 84034 Landshut (DE)
(74) Vertreter: Meissner, Bolte & Partner

(57) **Zusammenfassung**

Es wird ein bidirektionaler resonanter Wandler 100 mit einer Primärseite und einer Sekundärseite und einem die Primär- und die Sekundärseite verbindenden Transformator mit einer Primärinduktivität und einer Sekundärinduktivität angegeben. Mit dem Ziel, eine sichere und verlustarme Energieübertragung zwischen der Primär- und der Sekundärseite zu gewährleisten, sieht die erfindungsgemäße Lösung ein primärseitiges mit der Primärinduktivität (L1) verbundenes oder die Primärinduktivität (L1) resonant einbeziehendes Primärresonanznetzwerk (200) und mindestens ein sekundärseitiges mit der mindestens einen Sekundärinduktivität (L3, L5) verbundenes oder die Sekundärinduktivität (L3, L5) resonant einbeziehendes Sekundärresonanznetzwerk (300) vor.

## Beschreibung

Die vorliegende Erfindung betrifft einen Wandler zum Übertragen von elektrischer Leistung zwischen einer Primär- und einer Sekundärseite eines Transformators.

Wandler zum Übertragen elektrischer Energie zwischen einer Primär- und einer Sekundärseite eines Transformators sind allgemein aus der Technik bekannt. Insbesondere bei Photovoltaikanlagen kommen vielfach Wandler mit einem Transformator zum Einsatz, deren Primär- und Sekundärseiten jeweils mittels eines Schaltnetzwerkes, insbesondere eines in Halbbrücken- oder Vallbrückenschaltung ausgebildeten Transistornetzwerkes, angesteuert werden. Insbesondere sind derartige herkömmliche Wandlerschaltungen in der Regel dazu ausgelegt, eine primärseitige Gleichspannung in eine sekundärseitige Gleichspannung anderen Betrages zu wandeln. Die primärseitige Brückenschaltung steuert hierzu die Primärwindung des Transformators entsprechend an, um eine Beaufschlagung der Primärwindung mit einer Wechselspannung nachzubilden. Demgemäß dient die sekundärseitige Brückenschaltung dazu, die an der Sekundärwindung des Transformators abgegriffene transformierte Wechselspannung anschließend wieder gleichzurichten.

Derartige Wandler weisen insbesondere den Nachteil auf, dass beim Ausfall einzelner Transistoren in den jeweiligen Brückenschaltungen ungewollt Energie auf die jeweils gegenüberliegende Seite übertragen wird. Eine derartige unerwünschte Energieübertragung hat den Defekt des dem ausgefallenen Transistors jeweils gegenüberliegenden Transistors zur Folge, sodass auf der Primärwie auch auf der Sekundärseite ein unerwünschter Kurzschlussstrom durch den Transformator fließt.

Es ist daher die Aufgabe der vorliegenden Erfindung, einen Wandler mit einem eine Primär- und eine Sekundärseite verbindenden Transformator anzugeben, welcher mit geringen Verlusten arbeitet und bei dem die Folgen von Bauelementausfällen begrenzt sind.

Die Erfindung geht von der Überlegung aus, bei Minimierung der Magnetfeldverluste gleichzeitig in einem Fehlerfall der Ansteuerschaltungen des Wandlers zu gewährleisten, dass höchstens ein vernachlässigbar kleiner Energiebetrag auf die jeweils andere Transformatorseite übertragen werden kann, welcher keine schädigenden Einflüsse auf die an diese gegenüberliegende Seite angeschalteten Komponenten hat.

Die Aufgabe wird dadurch gelöst, dass ein auch bidirektional betreibbarer resonanter Wandler mit einer Primär- und einer Sekundärseite sowie einem die Primär- und die Sekundärseite verbindenden und eine Primärinduktivität und mindestens eine Sekundärinduktivität aufweisenden Transformator zum induktiven Verbinden der Primär- und der Sekundärseite angegeben wird, wobei der bidirektionale resonante Wandler weiterhin ein primärseitiges mit der Primärinduktivität des Transformators verbundenes oder die Primärinduktivität resonant einbeziehendes Primärresonanznetzwerk sowie mindestens ein sekundärseitiges mit der mindestens einen Sekundärinduktivität verbundenes oder die Sekundärinduktivität resonant einbeziehendes Sekundärresonanznetzwerk aufweist. Weiterhin weist der Wandler ein primärseitiges erstes Schaltnetzwerk zum ansteuerbar getakteten Durchschalten mindestens eines ersten elektrischen Potentials an das Primärresonanznetzwerks und ein sekundärseitiges zweites Schaltnetzwerk zum ansteuerbar getakteten Durchschalten mindestens eines zweiten elektrischen Potentials an das Sekundärresonanznetzwerk auf. Die erfindungsgemäße Lösung weist eine Reihe wesentlicher Vorteile gegenüber den vorstehend erläuterten herkömmlichen Wandlern auf. Dadurch, dass sowohl primärseitig als auch sekundärseitig jeweils an den Transformatorinduktivitäten Resonanznetzwerke vorgesehen sind, ist insbesondere im Fehlerfall, d. h. beim Ausfall einzelner Bestandteile des primärseitigen ersten Schaltnetzwerkes bzw. des sekundärseitigen zweiten Schaltnetzwerkes eine sofortige Abkopplung der Transformatorinduktivitäten vom Energiefluss gewährleistet. Hierdurch wird einerseits eine unerwünschte und möglicherweise in ihrer Amplitude schädigende Energieübertragung auf die jeweils gegenüberliegende Seite wirksam verhindert. Andererseits ist somit auch gewährleistet, dass beispielsweise im Falle eines ständig durchschaltenden Transistors innerhalb des primärseitigen ersten Schaltnetzwerkes bzw. des sekundärseitigen zweiten Schaltnetzwerkes kein unerwünschter Kurzschlussstrom durch den Transformator fließt.

Durch die jeweils auf beiden Seiten des Transformators vorgesehenen Resonanznetzwerke kann insbesondere das Regelverhalten eines ggfs. zusätzlich vorgesehenen Spannungs- bzw. Leistungsreglers verbessert werden, da das bestmögliche Übertragungsverhalten des Transformators durch einen mittels passender Bemaßung der Resonanznetzwerke gut annäherbaren Resonanzfall gewährleistet ist. Insbesondere ergibt sich im Anpassungsfall des Primärresonanznetzwerkes und des Sekundärresonanznetzwerkes eine schärfer begrenzte Resonanzkurze, deren Steilheit in weitem Maße einstellbar ist. Als hieraus resultierender Effekt kann insbesondere die Trägheit des Regelverhaltens eines ggfs. vorgesehenen und oben beschriebenen Reglers fast beliebig eingestellt werden.

Insbesondere ist durch die erfindungsgemäße Lösung, d. h. durch das Vorsehen sowohl eines Primärresonanznetzwerkes als auch eines Sekundärresonanznetzwerkes durch gezielte Beeinflussung des Resonanzverhaltens bei entsprechender Abstimmung der Resonanzkreise, eine bevorzugte Übertragungsfrequenz, beispielsweise 20 kHz, wählbar, ohne Einfluss auf die Kopplungskonstante des Transformators nehmen zu müssen. Hierdurch ist es insbesondere möglich, einen möglichst optimalen Transformator verwenden zu können, ohne in aufwendiger Weise die Kopplungskonstante des Transformators manipulieren zu müssen.

Durch den strukturell weitgehend symmetrischen Aufbau des erfindungsgemäßen Wandlers ist es zudem leicht möglich, den resonanten Wandler bidirektional zu betreiben. So ist es in unaufwendiger Weise möglich, sowohl Energie von der Primär- auf die Sekundärseite zu übertragen, als auch umgekehrt. Zudem ist es in besonders einfacher Weise möglich, beliebige Wandlungen zwischen Gleich- und Wechselgrößen vorzunehmen, d. h. insbesondere den erfindungsgemäßen bidirektionalen resonanten Wandler wahlweise als DC-/AC-Wandler oder als AC-/DC-Wandler flexibel einzusetzen.

Vorteilhafte Weiterbildungen der Erfindung sind in den Unteransprüchen angegeben.

So ist es beispielsweise vorgesehen, dass das Primärresonanznetzwerk die Primärinduktivität des Transformators einbezieht und somit einen ersten Reihenschwingkreis bildet. Hierdurch ist ein besonders kostengünstiger Aufbau möglich, da im Idealfall ein vergleichsweise kostengünstiger Kondensator eingesetzt werden kann, welcher dann das erforderliche vorteilhafte Resonanzverhalten, d. h. die Ausbildung eines Reihenschwingkreises, durch direkten resonanten Energieaustausch mit der Primärinduktivität des Transformators vornimmt. Gleichzeitig bleibt die sofortige energetische Abkopplung im Fehlerfall gewährleistet.

Alternativ oder zusätzlich ist vorgesehen, dass das sekundäre Resonanznetzwerk einen die mindestens eine Sekundärinduktivität des Transformators einbeziehenden zweiten Reihenschwingkreis bildet. Insbesondere dann, wenn sowohl auf Seiten des primären Resonanznetzwerkes als auch auf Seiten des sekundären Resonanznetzwerkes lediglich ein zusätzlicher Kondensator eingesetzt wird, können die Kosten zur Verwirklichung des erfindungsgemäßen bidirektionalen resonanten Wandlers weiter reduziert werden.

In einer weiteren Ausführung ist vorgesehen, dass der erste und/oder der zweite Reihenschwingkreis unter Einbezug der jeweiligen Transformatorinduktivität einen LC-Reihenschwingkreis bilden.

Alternativ kann es aber auch vorgesehen sein, dass das Primärresonanznetzwerk und/oder das sekundäre Resonanznetzwerk jeweils einen LLC-Reihenschwingkreis bilden. In beiden Fällen ist es möglich, dass die jeweiligen Reihenschwingkreise unter Einbeziehung oder auch ohne Einbezug der jeweiligen Transformatorinduktivitäten ausgebildet sind. In jedem Fall wird durch eine derartige Lösung erreicht, dass die maximale Spannungsänderung des Wandlers durch die Eingangsspannung, d. h. die auf der Primär- oder der Sekundärseite jeweils anliegenden Spannung und durch das Bindungsverhältnis des Transformators, begrenzt ist. Auch bei hoher zu wandelnden Spannung ist somit eine hohe Effizienz gewährleistet, wobei der Wandler weiterhin bidirektional betreibbar ist.

Insbesondere dann, wenn der Wandler als Wechselrichter arbeitet, ist aufgrund der resonanten Ausführung gewährleistet, dass der Wandler auch mit relativ kostengünstigen elektronischen Schaltern wie beispielsweise MOSFETs hochfrequent geschaltet werden kann, wodurch die zum Einsatz kommenden Induktivitäten relativ klein sein können und somit ihrerseits zu einer gesteigerten Kosteneffizienz des erfindungsgemäßen Wandlers beitragen.

Gleichzeitig ist durch die beidseitige Ausführung mit Resonanzkreisen, insbesondere mit LLC-Reihenschwingkreisen gewährleistet, dass die übertragbare Leistung und hierbei vor allem der übertragbare Strom allein durch passive Schaltungskomponenten wirksam begrenzt ist, sodass es nicht zur unerwünschten erhöhten Energieübertragung im Fehlerfall kommt.

In einer weiteren Ausführung weist der Wandler auf der Primärseite und/oder auf der Sekundärseite jeweils einen zusätzlichen und zu der jeweiligen Transformatorinduktivität parallel geschalteten Parallelschwingkondensator auf. Hierdurch ist die Resonanzkurve des resonanten bidirektionalen Wandlers noch gezielter und feiner beeinflussbar.

In weiteren Ausführungen sind das primärseitige Schaltnetzwerk, das sekundärseitige Schaltnetzwerk oder auch beide Schaltnetzwerke als Transistornetzwerke in Halbbrückenschaltung ausgebildet. Hierbei können insbesondere preiswerte Standard-Feldeffekttransistoren zum Einsatz kommen, da durch die beidseitig resonante Ansteuerung der Transformatorinduktivitäten auch mit derartigen Standardbauteilen eine hochfrequente Ansteuerung gewährleistet werden kann. Durch den Einsatz von Halbbrückenschaltungen ist zudem ein vergleichweise kostengünstiger Aufbau möglich.

In einer weiteren Ausführung ist vorgesehen, das primärseitige erste Schaltnetzwerk, das sekundärseitige zweite Schaltnetzwerk oder auch beide Schaltnetzwerke jeweils als Transistornetzwerke in Vollbrückenschaltung auszubilden. Durch den Einsatz von Vollbrückenschaltungen kann insbesondere die jeweils ausgangsseitige Wellenform der abzugebenden Spannung gezielter beeinflusst werden, was in bestimmten Anwendungsfällen von Vorteil sein kann.

In einer noch weiteren Ausführung sind das primärseitige erste Schaltnetzwerk, das sekundärseitige zweite Schaltnetzwerk oder auch beide Schaltnetzwerke jeweils mehrstufig aufgebaut. Ein mehrstufiger Aufbau ist insbesondere dann leicht möglich, wenn die jeweilige Transformatorwindung, beispielsweise die Sekundärwindung, geteilt wird, jedoch weiterhin auf den gleichen Transformatorkern gewickelt wird. Hierdurch ist es möglich, die jeweilige derartig aufgebaute Seite dahingehend auszulegen, dass sie auch eine Spannung liefern kann, welche über der Sperrspannung der jeweils eingesetzten Transistoren liegt. Insbesondere dann, wenn preisgünstige Feldeffekttransistoren wie MOSFETs eingesetzt werden, ist es möglich, derartige MOSFETs in einer Source-Drain-Kaskade zusammenzuschalten, d. h. ihre jeweiligen Source-Drain-Strecken in Reihe zu schalten. Dies hat den Vorteil, dass die erreichbare Spannung lediglich durch die Isolationsfähigkeit des Transformators begrenzt ist, welche in bestimmten Anwendungsfällen höher liegen kann als die Sperrspannung der eingesetzten Schaltelemente, wie beispielsweise MOSFETS.

In einer weiteren Ausführung sind das primärseitige erste Schaltnetzwerk, das sekundärseitige zweite Schaltnetzwerk oder auch beide Schaltnetzwerke jeweils mit bidirektionalen elektronischen Schaltern ausgestattet. Hierfür kommen insbesondere gegenläufig geschaltete Feldeffekttransistoren oder auch gegenläufig geschaltete IGB-Transistoren in Frage. In diesem Fall ist es einfach möglich, den bidirektionalen resonanten Wandler sowohl als DC-/AC-Wandler als auch AC-/DC-Wandler zu verwenden. Grundsätzlich sind im Rahmen der Erfindung aber auch andere elektronische Schalter, etwa Thyristoren, einsetzbar.

Neben einer einphasigen Ausführung des Wandlers ist es möglich, den Wandler für mehrphasige Wechselspannungen, also primär- und/oder sekundärseitig für mehrphasige Wechselspannungen, insbesondere für eine dreiphasige Wechselspannung auszulegen. Dies hat den Vorteil, dass ein derartig aufgebauter Wandler beispielsweise auch in Mehrphasen-Wechselspannungsnetzen ("Drehstromnetzen") zum Einsatz kommen kann.

In einer weiteren Ausführung ist der Wandler ferner mit einem Regler ausgestattet, wobei der Regler ausgelegt ist, die Amplitude des ersten oder des zweiten Potentials durch geeignetes Ansteuern des jeweiligen anderen Schaltnetzwerkes zu regeln. Hierdurch ist durch die Kombination mit den auf beiden Seiten vorgesehenen Resonanznetzwerken ein besonders gutes Spannungsfolgeverhalten erzielbar. Hierbei kann der Regler zum geeigneten Ansteuern des jeweils anderen Schaltnetzwerkes durch eine Beeinflussung der Frequenz, der Pulsweite, der Pulsdichte oder/oder der Pulsfolge eines Ansteuertaktsignals ausgelegt sein.

In diesem Zusammenhang kann es auch vorgesehen sein, dass bei einem Transformator, weicher mindestens zwei Sekundärinduktivitäten aufweist, das primärseitige erste Schaltnetzwerk dahingehend ausgelegt ist, durch Beeinflussung der Frequenz des Ansteuertaktsignals zusätzlich eine Leistungsregelung vorzunehmen. In diesem Fall wird die jeweils sekundäre Seite durch bidirektionale Schalter aktiv angesteuert, was für die beschriebene Spannungsregelung, d. h. Spannungsamplitudenregelung sorgt. Auf der Primärseite wird die Kontrolle der abgegebenen Leistung durch die beschriebene Frequenzregelung erreicht, wodurch sich ein mehrphasiger DC-/AC-Wandler ergibt.

Ein beschriebener erfindungsgemäßer bidirektionaler resonanter Wandler kann vorzugsweise in einem Wechselrichter zum Einsatz kommen.

Im Folgenden werden vier bevorzugte Ausführungsbeispiele des erfindungsgemäßen bidirektionalen resonanten Wandlers anhand einer Zeichnung näher erläutert. Es zeigen:
Fig. 1 ein Schaltbild eines bidirektionalen resonanten Wandlers gemäß einer ersten Ausführungsform der Erfindung;
Fig. 2 ein Schaltbild eines erfindungsgemäßen bidirektionalen resonanten Wandlers gemäß einer zweiten Ausführungsform der Erfindung;
Fig. 3 ein Schaltbild des erfindungsgemäßen bidirektionalen resonanten Wandlers gemäß einer dritten Ausführungsform der Erfindung; und
Fig. 4 ein Schaltbild des erfindungsgemäßen bidirektionalen resonanten Wandlers gemäß einer vierten Ausführungsform der Erfindung.

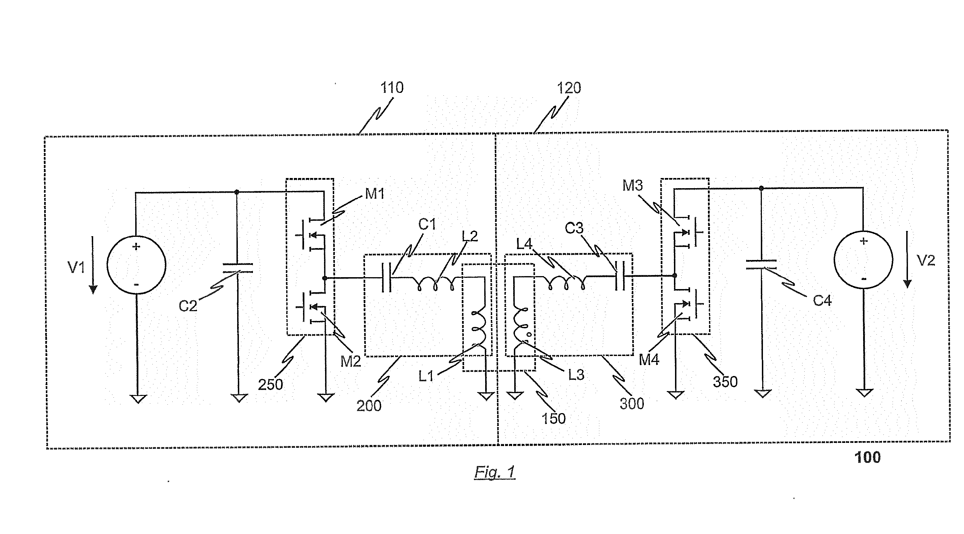

Figur 1 zeigt ein Schaltbild eines bidirektionalen resonanten Wandlers 100 zur Übertragung elektrischer Energie zwischen einer Primärseite 110 und einer Sekundärseite 120 des Wandlers 100. Ein erstes elektrisches Potential V1 ist über einen Pufferkondensator C2 mit einem ersten Schaltnetzwerk 250 verbunden, wobei das erste Schaltnetzwerk 250 als Halbbrückenschaltung ausgebildet ist und aus zwei hinsichtlich ihrer Source-Drain-Strecke zusammen geschalteten selbstsperrenden N-Kanal-MOSFETs M1, M2 besteht. Zur zeichnerischen Vereinfachung ist in Figur 1 wie auch in den anderen Figuren eine die Gates der jeweiligen MOSFETs ansteuernde Steuerschaltung nicht dargestellt. An der Source-Drain-Verbindung der Transistoren M1, M2 zweigt ein aus einem Kondensator C1 und einer Induktivität L2 gebildeter Reihenschwingkreis ab, welcher eine Primärinduktivität L1 eines Transformators 150 an das erste Schaltnetzwerk 250 anbindet und gemeinsam mit der Primärinduktivität L1 des Transformators 150 ein Primärresonanznetzwerk 200, im beschriebenen Ausführungsbeispiel ein LLC-Primärresonanznetzwerk, bildet.

Durch die Transformatorkopplung wird elektrische Energie auf die Sekundärwindung L3 des Transformators 150 übertragen, welche bereits Teil der Sekundärseite 120 ist. In symmetrischen Aufbau zur Primärseite 110 schließt an die Sekundärinduktivität L3 ein weiterer aus Induktivität L4 und Kondensator C3 gebildeter Reihenschwingkreis an, womit die Kombination aus dem aus dem Kondensator C3 und der Induktivität L4 gebildeten Reihenschwingkreis und der Sekundärinduktivität L3 des Transformators 150 ein Sekundärresonanznetzwerk 300 bildet, das im gezeigten ersten Ausführungsbeispiel der Erfindung als LLC-Resonanznetzwerk ausgebildet ist.

In analoger Weise zur Beschreibung des ersten Schaltnetzwerkes 250 auf der Primärseite 110 schließt sich an dieses sekundäre Resonanznetzwerk 300 ein aus zwei MOSFETs M3, M4 gebildetes zweites Schaltnetzwerk 350 an, welches über einen Pufferkondensator C4 an ein zweites elektrisches Potential V2 angebunden ist.

Insbesondere durch den symmetrischen Aufbau kommt eine Spannungsübertragung und eine Spannungswandlung, d. h. eine sowohl in Amplitude als auch in ihrer Art beeinflussbare Spannungswandlung sowohl vom ersten elektrischen Potential V1 auf das zweite elektrische Potential V2 als auch in umgekehrter Richtung, in Frage. Der in Figur 1 dargestellte resonante Wandler 100 fungiert demnach als bidirektionaler Wandler 100.

Durch die resonante Ausbildung, d. h. die Ankopplung des Primärresonanznetzwerkes 200 an das sekundäre Resonanznetzwerk 300 durch den Transformator 150, ist zudem gewährleistet, dass durch entsprechende Wahl der einfach austauschbaren Komponenten Kondensator C1 bzw. Induktivität L2 des Primärresonanznetzwerkes 200 auf der Primärseite 110 bzw. Kondensator C3 und Induktivität L4 des sekundären Resonanznetzwerkes 300 auf der Sekundärseite 120 durch Wahl der entsprechenden Anpassbedingung, d. h. durch Abstimmung der Resonanzkreise ein für den Einsatzzweck optimaler Transformator 150 zum Einsatz kommen kann, ohne dass die Kopplungskonstante des Transformators 150 manipuliert werden müsste.

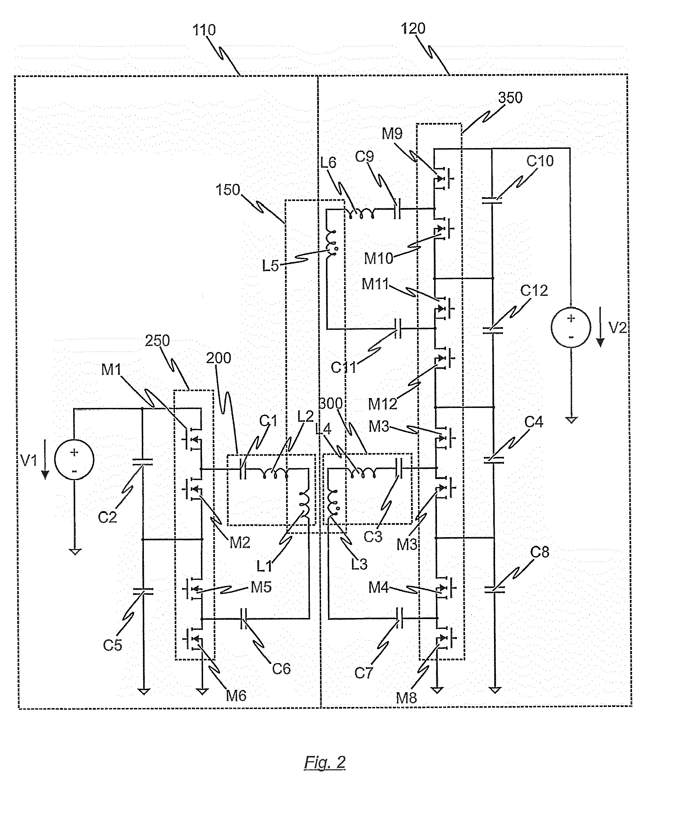

Wie aus dem zweiten Ausführungsbeispiel gemäß Figur 2 ersichtlich ist, ist es in einfacher Art und Weise auch möglich, den erfindungsgemäßen bidirektionalen resonanten Wandler 100 mit einer mehrstufigen Brückenschaltung auszustatten. Im gezeigten zweiten Ausführungsbeispiel gemäß Figur 2 ist hier das zweite Schaltnetzwerk 350 als mehrstufig angesteuerte Halbbrückenschaltung ausgebildet, wobei jede der Stufen des zweiten Schaltnetzwerkes 350 jeweils mittels eines eigenen Pufferkondensators C4, C8, C10, C12 gepuffert ist. Durch die Kaskadierung der einzelnen MOSFETs M3, M4, M8, M9, M10, M11, M12 ist damit der maximale Betrag des zweiten elektrischen Potentials V2 nicht mehr auf die Sperrspannungen der jeweils eingesetzten MOSFETs begrenzt. Um also ausgangsseitig eine höhere Spannung, d. h. ein höheres elektrisches Potential V2, zu erreichen, ist der Transformator 150 gemäß dem in Figur 2 dargestellten zweiten Ausführungsbeispiel mit zwei Sekundärinduktivitäten L3, L5 ausgestattet, welche auf den gleichen Transformatorkern gewickelt sind. Dadurch ist der Maximalbetrag des zweiten elektrischen Potentials V2 lediglich durch die Isolationsfähigkeit des Transformators 150 begrenzt.

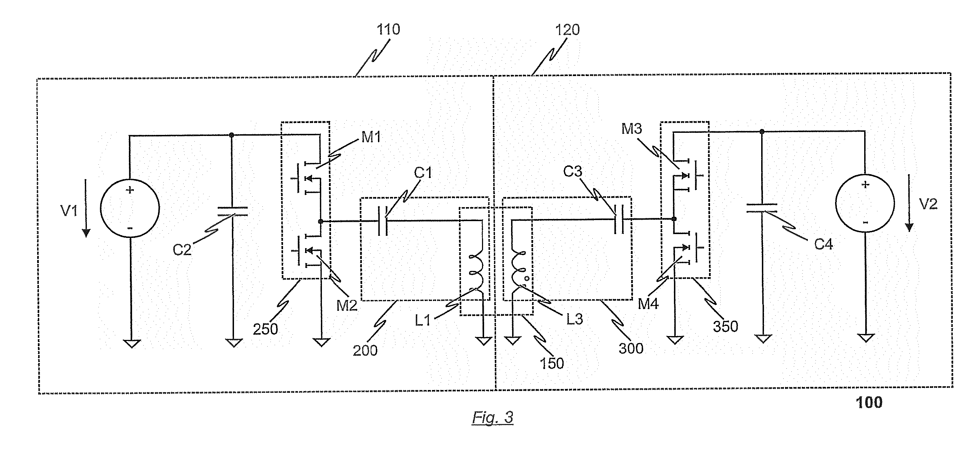

Der Wandler 100 gemäß dem dritten Ausführungsbeispiel, wie in Figur 3 gezeigt, ist ähnlich wie der Wandler im ersten Ausführungsbeispiel gemäß Figur 1 aufgebaut. Im Unterschied hierzu weist der Wandler jedoch jeweils ein Primärresonanznetzwerk 200 und ein Sekundärresonanznetzwerk 300 auf, welche nunmehr lediglich aus jeweils einem Kondensator C1, C3 und der Primärinduktivität L1 bzw. der Sekundärinduktivität L3 des Transformators 150 gebildet sind. Auf diese Weise ist es möglich, die Resonanzkurve des Wandlers 100 durch geeignete Wahl der Kondensatoren C1, C3 weiterhin zu beeinflussen, gleichzeitig aber auf teure zusätzliche Induktivitäten (im Ausführungsbeispiel gemäß Figur 1 die Induktivitäten L2, L4) zu verzichten. Gleichzeitig bleibt aber die besondere Sicherheit des dargestellten Wandlers 100 auch im gezeigten dritten Ausführungsbeispiel gemäß Figur 3 gewahrt, d. h. im Fehlerfall, also bei Ausfall einer der MOSFETs M1, M2, M3, M4, ist weiterhin eine sofortige Abkopplung der jeweils gegenüberliegenden Seite vom Leistungsfluss und insbesondere vom Stromfluss gewährleistet.

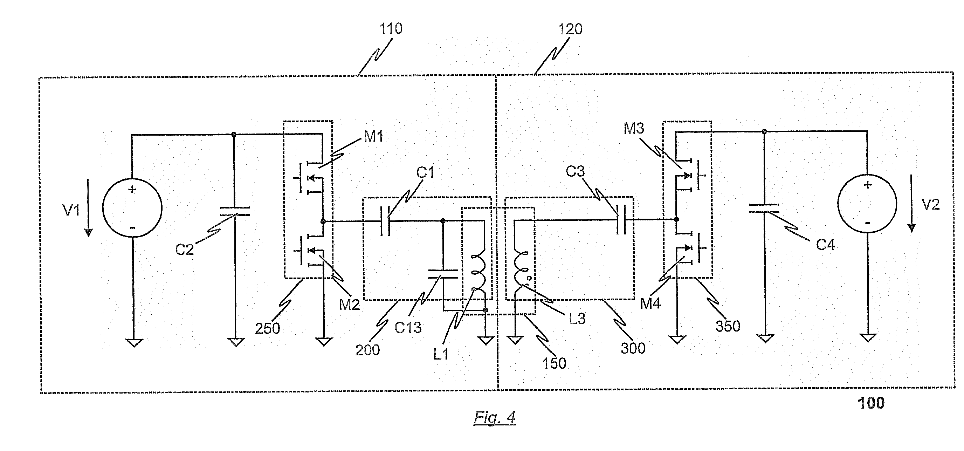

Das in Figur 4 dargestellte vierte Ausführungsbeispiel unterscheidet sich nunmehr von dem dritten Ausführungsbeispiel gemäß Figur 3 dadurch, dass ein zusätzlich zu der Primärinduktivität L1 des Transformators 150 parallel geschalteter Parallelschwingkondensator C13 zum Einsatz kommt. Genauso gut könnte alternativ oder zusätzlich auch auf der Sekundärseite ein entsprechender Parallelschwingkondensator zum Einsatz kommen.

Hierdurch ist es möglich, die Resonanzkurve des erfindungsgemäßen bidirektionalen resonanten Wandlers 100 noch feiner zu beeinflussen.

Die Ausführung der Erfindung ist nicht auf die oben beschriebenen Beispiele und hervorgehobenen Aspekte beschränkt, sondern ebenso in einer Vielzahl von Abwandlungen möglich, die im Rahmen fachgemäßen Handelns liegen.

## Patentansprüche

1. Bidirektionaler resonanter Wandler (100), der folgendes aufweist:
- eine Primär- und eine Sekundärseite (110, 120), wobei die Primär- und die Sekundärseite(110, 120) mittels eines eine Primärinduktivität (41) und mindestens eine Sekundärinduktivität (23, 25) aufweisenden Transformators (150) induktiv miteinander verbunden sind;
- ein primärseitiges mit der Primärinduktivität (L1) verbundenes oder die Primärinduktivität (L1) resonant einbeziehendes Primärresonanznetzwerk (200);
- mindestens ein sekundärseitiges mit der mindestens einen Sekundärinduktivität (23, 25) verbundenes oder die Sekundärinduktivität (L3, L5) resonant einbeziehendes Sekundärresonanznetzwerk (300);
- ein primärseitiges erstes Schaltnetzwerk (250) zum ansteuerbar getakteten Durchschalten mindestens eines ersten Potentials (V1) an das Primärresonanznetzwerk (200); und
- ein sekundärseitiges zweites Schaltnetzwerk (350) zum ansteuerbar getakteten Durchschalten mindestens eines zweiten Potentials (V2) an das Sekundärresonanznetzwerk (300).

2. Wandler (100) nach Anspruch 1, wobei das Primärresonanznetzwerk (200) einen die Primärinduktivität (L1) einbeziehenden ersten Reihenschwingkreis bildet.

3. Wandler (100) nach Anspruch 1 ader 2, wobei das Sekundärresonanznetzwerk (300) einen die mindestens eine Sekundärinduktivität (L3, L5) einbeziehenden zweiten Reihenschwingkreis bildet.

4. Wandler (100) nach Anspruch 2 oder 3 wobei der erste und/oder der zweite Reihenschwingkreis jeweils ein LC-Reihenschwingkreis ist.

5. Wandler (100) nach einem der Ansprüche 1 bis 3, wobei das Primärresonanznetzwerk (200) und/oder das Sekundärresonanznetzwerk (300) jeweils einen LLC-Reihenschwingkreis bilden.

6. Wandler (100) nach einem der vorherigen Ansprüche, wobei der Transformator (150) auf der Primärseite (110) und/oder auf der Sekundärseite (120) jeweils einen zusätzlichen und zu der Primärinduktivität (L1) bzw. zu der mindestens einen Sekundärinduktivität (L3, L5) parallel geschalteten Parallelschwingkondensator (C13) aufweist.

7. Wandler (100) nach einem der vorherigen Ansprüche, wobei das primärseitige erste Schaltnetzwerk (250) als erstes Transistornetzwerk in Halbbrückenschaltung ausgebildet ist, und/oder wobei das sekundärseitige zweite Schaltnetzwerk (350) als zweites Transistornetzwerk in Halbbrückenschaltung ausgebildet ist.

8. Wandler (100) nach einem der Ansprüche 1 bis 6, wobei das primärseitige erste Schaltnetzwerk (250) als erstes Transistornetzwerk in Vollbrückenschaltung ausgebildet ist, und/oder wobei das sekundärseitige zweite Schaltnetzwerk (350) als zweites Transistornetzwerk in Vollbrückenschaltung ausgebildet ist.

9. Wandler (100) nach einem der vorherigen Ansprüche, wobei das primärseitige ersten Schaltnetzwerk (250) und/oder das sekundärseitige zweite Schaltnetzwerk (350) jeweils mehrstufig aufgebaut sind.

10. Wandler (100) nach einem der vorherigen Ansprüche, wobei das primärseitige erste Schaltnetzwerk (250) und/oder das sekundärseitige zweite Schaltnetzwerk (350) jeweils bidirektionale elektronische Schalter, vorzugsweise gegenläufig geschaltete Feldeffekttransistoren oder IGB-Transistoren, aufweist.

11. Wandler (100) nach einem der vorherigen Ansprüche, wobei der Wandler (100) ausgelegt ist, primär- und/oder sekundärseitig mehrphasige Wechselspannungen, insbesondere dreiphasige Wechselspannungen, umzusetzen.

12. Wandler (100) nach einem der vorherigen Ansprüche, wobei der Wandler (100) ferner einen Regler aufweist, und wobei der Regler ausgelegt ist, die Amplitude des ersten oder des zweiten Potentials (V1, V2) durch geeignetes Ansteuern des jeweils anderen Schaltnetzwerks (250, 350) zu regeln.

13. Wandler (100) nach Anspruch 12, wobei der Regler ausgelegt ist, das geeignete Ansteuern durch Beeinflussung der Frequenz, der Pulsweite, der Pulsdichte und/oder der Pulsfolge eines Ansteuertaktsignals vorzunehmen.

14. Wandler (100) nach Anspruch 13, wobei der Transformator (150) mindestens zwei Sekundärinduktivitäten (L3, L5) aufweist, und wobei das primärseitige erste Schaltnetzwerk (250) ausgelegt ist, durch Beeinflussung der Frequenz des Ansteuertaktsignals zusätzlich eine Leistungsregelung vorzunehmen.

15. Wechselrichter mit einem Wandler (100) nach einem der vorherigen Ansprüche.
